# FASCICULE DE BREVET EUROPEEN

(11) **EP 4 267 383 B1**
(45) Date de publication et mention de la délivrance du brevet: **01.01.2025**
(21) Numéro de dépôt: 21836591.4
(22) Date de dépôt: 29.11.2021
(51) Int. Cl.: B29D 30/38, B60C 9/20, B60C 9/00

(54) **TISSU RENFORCÉ COMPRENANT UNE PLURALITÉ D'ÉLÉMENTS DE RENFORT MÉTALLIQUES**
VERSTÄRKTES GEWEBE MIT EINER VIELZAHL VON METALLVERSTÄRKUNGSELEMENTEN
REINFORCED FABRIC COMPRISING A PLURALITY OF METAL REINFORCING ELEMENTS

(30) Priorité: 22.12.2020 FR 2013934
(43) Date de publication de la demande: 01.11.2023
(73) Titulaire: COMPAGNIE GENERALE DES ETABLISSEMENTS MICHELIN, 63000 Clermont-Ferrand (FR)
(72) Inventeur: DEPARIS, Xavier, 63040 Clermont-Ferrand Cedex 9 (FR); CLERGEAT, Jean-Mathieu, 63040 Clermont-Ferrand Cedex 9 (FR)
(74) Mandataire: M.F.P. Michelin
(86) Numéro de dépôt international: PCT/FR2021/052117
(87) Numéro de publication internationale: WO 2022/136749

(56) Documents cités:
- WO-A1-2016/189126
- FR-A1- 3 008 997
- JP-A- 2017 048 351

## Description

### Domaine technique de l'invention

La présente invention est relative au domaine des tissus renforcés, en particulier des tissus renforcés utilisés dans les bandages pneumatiques, ainsi qu'au domaine des bandages pneumatiques.

### Art antérieur

Un bandage pneumatique à armature de carcasse radiale pour véhicule tourisme ou camionnette comporte, on le sait, une bande de roulement, deux bourrelets inextensibles, deux flancs souples reliant les bourrelets à la bande de roulement et une armature de sommet rigide, ou « ceinture » ("belt"), disposée circonférentiellement entre l'armature de carcasse et la bande de roulement.

L'armature de sommet comprend plusieurs tissus renforcés, appelés nappes, et est généralement constituée par au moins deux nappes de caoutchouc dites « nappes de travail », « nappes de triangulation » ou encore « armatures de travail », superposées et croisées, renforcées le plus souvent de câbles métalliques disposés sensiblement parallèlement les uns par rapport aux autres et inclinés par rapport au plan circonférentiel médian du bandage pneumatique, et une nappe de caoutchouc située au-dessus des nappes de travail (côté bande de roulement), dite « nappe de frettage » ou « armature de frettage », qui est renforcée généralement par des fils de renforcement dits « circonférentiels » et ayant pour fonction première de résister à la centrifugation du sommet à haute vitesse. Ces nappes peuvent être associées ou non à d'autres nappes et/ou tissus de caoutchouc. Les nappes de travail ont pour fonction première de donner au pneu une rigidité ou poussée de dérive (en anglais, "drift thrust" ou "cornering") élevée, nécessaire de manière connue pour l'obtention d'un bon comportement routier ("handling") sur véhicule automobile.

De telles structures de ceintures, consistant finalement en un stratifié composite multicouche comportant au moins une nappe de frettage, le plus souvent textile, et deux nappes de travail généralement métalliques, sont bien connues de l'homme du métier et ne nécessitent pas d'être décrites ici plus en détail. De telles structures de ceintures sont illustrées par exemple par les documents US 4 371 025 et FR 2 504 067.

La disponibilité en aciers de plus en plus résistants et endurants fait que les manufacturiers de pneumatiques s'orientent aujourd'hui, autant que possible, vers l'emploi dans les ceintures de pneumatiques de câbles à structure très simple, notamment à seulement deux fils, voire même de filaments unitaires, afin d'une part de simplifier la fabrication et diminuer les coûts, d'autre part de diminuer l'épaisseur des nappes de renforcement et ainsi l'hystérèse des pneumatiques et, en fin de compte réduire la consommation d'énergie des véhicules équipés de tels pneumatiques.

Les efforts visant à réduire la masse des pneumatiques, en particulier par une réduction d'épaisseur de leur ceinture et des couches de caoutchouc la constituant, se heurtent toutefois, bien naturellement, à des limites physiques qui peuvent donner lieu à un certain nombre de difficultés. Il peut notamment se produire que la fonction de frettage apportée par l'armature de frettage et celle de rigidification apportée par l'armature de travail ne soient plus suffisamment différenciées l'une de l'autre et puissent se perturber mutuellement. Ceci est préjudiciable au bon fonctionnement du sommet du pneumatique, à la performance et l'endurance globale du pneumatique.

C'est ainsi que les demandes de brevet WO 2013/117476 et WO 2013/117477 ont proposé un stratifié composite multicouche de structure spécifique qui permet d'alléger notablement la ceinture des pneumatiques, et donc d'abaisser leur résistance au roulement, tout en palliant les inconvénients cités ci-dessus, constitué d'une nappe de frettage textile et de deux nappes de travail comprenant des monofilaments métalliques. La demande WO2019/020888 vise à réduire encore plus la masse des nappes tout en améliorant la résistance au flambage, en liant diamètre des monofilaments métalliques, densité desdits monofilaments et épaisseur de la nappe.

D'autres travaux, tels que par exemple ceux exposés dans la demande JP2001/328407, ont porté sur la mise en oeuvre d'éléments de renfort métalliques dont la section transverse n'est plus circulaire, mais inscrite dans un rectangle afin, notamment, d'affiner les nappes, conduisant ainsi à leur allégement et induisant une baisse de la résistance au roulement du bandage pneumatique. Le document JP2017/048351 enseigne l'utilisation d'un renfort plat dont le rapport hauteur sur largeur est préférentiellement compris entre 0,4 et 0,5 avec un intercâble, c'est-à-dire la distance entre deux éléments de renforts consécutifs, compris entre 0,15 et 0,54 mm, associé à une composition élastomérique spécifique afin d'abaisser la résistance au roulement, de limiter les problèmes d'échauffement et d'éviter les problèmes de séparation de nappe.

Cependant, l'alourdissement des véhicules et leurs performances accrues conduisent, entre autres, à augmenter la force à rupture des nappes. Cette force peut être accrue par exemple en augmentant la résistance mécanique des renforts métalliques, avec des limites inhérentes à la disponibilité des aciers, ou en augmentant leur diamètre et/ou la densité de ces renforts, ce qui peut conduire à augmenter l'épaisseur des nappes et/ou leur masse, donc alourdir le bandage pneumatique et/ou à réduire l'espace séparant deux éléments de renfort métalliques consécutifs au sein d'une nappe. Il devient alors difficile de nourrir les ponts de gomme situés entre les éléments de renfort, ce qui peut nuire à l'endurance de la ou des nappes et donc du bandage pneumatique, en particulier en raison du risque de clivage, qui correspond à l'apparition de fissures se propageant entre les nappes de travail. La réduction de l'intercâble peut également rendre difficile la fabrication des nappes, en imposant de mettre en parallèle et à faible distance les uns des autres de nombreux fils métalliques.

Poursuivant ses recherches, la demanderesse a découvert une configuration spécifique de tissu renforcé par des éléments de renfort métalliques présentant une très bonne résistance à la rupture, une plus faible résistance au roulement et un intercâble suffisant pour éviter les problèmes éventuels de clivage par rapport aux tissus renforcés de l'état de la technique.

### Description détaillée de l'invention

### Définitions

Par direction principale, on entend la direction selon laquelle s'étend la plus grande dimension d'un élément de renfort métallique, confondue avec l'axe de cet élément de renfort.

Par direction transverse, on entend une direction perpendiculaire à la direction principale.

Par substantiellement, on entend dans les limites de tolérances mécaniques ou des méthodes de mesure.

Les composés comprenant du carbone mentionnés dans la description peuvent être d'origine fossile, ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Tissu renforcé

L'invention concerne un tissu renforcé comprenant une pluralité d'éléments de renfort métalliques substantiellement parallèles entre eux et s'étendant selon une direction principale, agencés selon une direction transverse perpendiculaire à la direction principale selon un pas de pose p exprimé en mm, noyés dans une composition élastomérique à base d'au moins un élastomère, une charge renforçante, un système de réticulation, chaque élément de renfort métallique présentant, dans un plan perpendiculaire à la direction principale, une section transverse inscrite dans un rectangle de longueur W et de hauteur T et ayant une résistance à la rupture R_{F} exprimée en MPa et mesurée selon la norme ISO 6892 de 1984, ledit tissu ayant une force à la rupture exprimée en N/mm égale à Rₙ, dans lequel le pas de pose des éléments de renfort métalliques est p≥ 0,8. R_{F}/Rₙ.(a-1+π/4).T², avec a=W/T et 1/a allant de 0,35 à 0,75.

Il est apparu que de telles caractéristiques permettaient de nourrir correctement le pont de gomme entre deux éléments de renfort consécutifs tout en allégeant le tissu renforcé par rapport à des tissus renforcés de l'art antérieur, tout en conservant des propriétés de résistance à la rupture et de rigidité dite « sur champ » et dite « hors plan » particulièrement intéressantes.

De manière connue de l'Homme du métier, le pas de pose est défini comme étant la distance entre les centres géométriques de deux éléments de renfort métalliques immédiatement voisins, mesurée selon la direction transverse.

De manière préférée, le pas de pose p est tel que p≤ 1,2. R_{F}/Rₙ.(a-1+π/4).T². En effet, lorsque le pas devient trop important, la coopération entre les éléments de renfort métalliques juxtaposés devient moins bonne lorsque le tissu est utilisé comme nappe de travail dans un bandage pneumatique.

Très préférentiellement, le pas de pose p est tel que 0,9. R_{F}/Rₙ.(a-1+π/4).T²≤p≤ 1,1. R_{F}/Rₙ.(a-1+π/4).T².

### Élément de renfort

Chaque élément de renfort est métallique. Préférentiellement, l'élément de renfort comprend une âme en acier revêtue d'une couche de revêtement métallique réalisée dans un métal différent de l'acier afin d'améliorer, par exemple, les propriétés de mise en oeuvre de l'élément de renfort, ou les propriétés d'usage de l'élément de renfort et/ou du bandage, telles que les propriétés d'adhésion, de résistance à la corrosion ou encore de résistance au vieillissement. Par exemple, le métal de la couche du revêtement métallique est choisi parmi le zinc, le cuivre, l'étain et les alliages de ces métaux. Comme exemples d'alliages de ces métaux, on citera le laiton et le bronze.

L'acier peut présenter une microstructure perlitique, ferritique, austénitique, bainitique, martensitique ou une microstructure issue d'un mélange de ces microstructures.

Selon un mode de réalisation préférentiel, lorsqu'un acier au carbone est utilisé, sa teneur en carbone (% en poids d'acier) est comprise dans un domaine allant de 0,2% à 1,2% ; selon un autre mode de réalisation préférentiel, la teneur en carbone de l'acier est comprise dans un domaine allant de 0,6% à 0,8%.

L'invention s'applique en particulier à des aciers du type steel cord à haute résistance (dits « HT » pour « High Tensile »), préférentiellement à très haute résistance (dits « SHT » pour « Super High Tensile »), voire à ultra haute résistance (dits « UHT » pour « Ultra High Tensile »), les éléments de renfort possédant alors une résistance en traction (R_{F}) qui est de préférence supérieure ou égale à 3650-2000.D, où D, exprimé en mm, est égal à (T+W)/2, plus préférentiellement supérieure ou égale à 4000-2000.D, et de manière préférée supérieure ou égale à 4350-2000.D. L'allongement total à la rupture (At) de ces renforts, somme de l'allongement élastique et de l'allongement plastique, est de préférence supérieur à 2,0%.

De manière préférée, chaque élément de renfort présente une déformation élastique en torsion C, exprimée en valeur absolue, inférieure ou égale à 6 tours par 6 m de renfort métallique, préférentiellement inférieure ou égale à 3 tours par 6 m de renfort métallique.

Cette faible déformation élastique permet d'obtenir un tissu suffisamment plan pour être incorporé facilement dans un article de caoutchouc, en particulier un bandage pneumatique. Dans un arrangement préféré, on pourra disposer les éléments de renfort dans le tissu de manière à alterner leurs déformations élastiques, comme enseigné dans le document WO2017/203119.

Chaque élément de renfort métallique présente une section transverse, dans un plan perpendiculaire à la direction principale, inscrite dans un rectangle de longueur W et de hauteur T.

Un tel élément de renfort est, en soi, bien connu de l'état de la technique et décrit par exemple dans les documents JP2001/328407 et DE102015209343. Cet élément de renfort peut être obtenu par exemple par tréfilage, en utilisant des filières de forme substantiellement rectangulaire, les angles pouvant être arrondis, ou en écrasant par passage au laminoir un élément de renfort métallique de section circulaire.

Chaque élément de renfort métallique du tissu selon l'invention présente préférentiellement un rapport 1/a, représentant le rapport de sa hauteur, ou épaisseur, T sur sa largeur W allant de 0,35 à 0,65, préférentiellement allant de 0,45 à 0,65. Un tel rapport préféré permet d'augmenter significativement la rigidité dite « sur champ », c'est-à-dire selon la direction axiale d'un bandage pneumatique comprenant un tel tissu en tant que nappe de travail, en ne modifiant sensiblement pas la rigidité dite « hors plan », c'est-à-dire selon la direction radiale d'un bandage pneumatique comprenant un tel tissu en tant que nappe de travail, une rigidité hors plan plus faible permettant une meilleure « mise à plat » du bandage pneumatique sur un sol horizontal.

De manière préférée, chaque élément de renfort métallique présente une hauteur, ou épaisseur, T allant de 0,15 à 0,70 mm, préférentiellement de 0,15 à 0,40 mm, très préférentiellement de 0,20 à 0,30 mm. Une telle épaisseur, associée aux autres caractéristiques de l'élément de renfort métallique, permet d'obtenir un bon compromis entre l'épaisseur totale de la nappe de travail et sa force à la rupture.

Le tissu renforcé présente préférentiellement une force à la rupture Rₙ supérieure ou égale à 220 N/mm, de préférence supérieure ou égale à 300 N/mm, de manière préférée comprise entre 330 et 470 N/mm. De telles résistances à rupture sont particulièrement avantageuses lorsque le tissu selon l'invention est mis en oeuvre dans un bandage pneumatique destiné à supporter des charges relativement lourdes, telles que les véhicules de tourisme modernes, en particulier les véhicules de type « Sport Utility Vehicles », ou les camionnettes.

L'épaisseur totale du tissu renforcé est égale à l'épaisseur de l'élément de renfort métallique à laquelle on ajoute les épaisseurs de gomme situées de part et d'autre de l'élément de renfort, dites « épaisseur au dos », mesurées selon une direction radiale, perpendiculaire au plan formé par les directions transverse et principale. Ces deux épaisseurs au dos, de part et d'autre du renfort, peuvent être identiques ou différentes, et sont notées « edos_1 » et « edos_2 ». Ainsi, l'épaisseur totale du tissu renforcé mesurée selon la direction radiale s'exprime selon edos_1 +T +edos_2. Dans l'arrangement particulier où edos_1 = edos_2, l'épaisseur de gomme au dos du renfort est alors simplement notée « edos » et l'épaisseur totale du tissu renforcé mesurée selon la direction radiale est égale à T+2.edos.

Plus l'épaisseur du tissu est faible, plus l'hystérèse et donc plus la résistance au roulement d'un bandage pneumatique comprenant un tel tissu est faible. Les ponts de gomme entre les éléments de renfort métalliques permettent de reprendre correctement les efforts s'exerçant sur la ou chaque nappe. Toutefois, une épaisseur de tissu trop faible présente un risque important de comporter des ponts de gomme imparfaitement formés et donc une mauvaise reprise des efforts du ou des tissus lorsqu'il(s) est (sont) utilisé(s) comme nappe(s) de travail d'un bandage pneumatique. D'autre part, dans un bandage pneumatique, une épaisseur de tissu trop faible présente le risque de rapprocher les éléments de renfort métalliques du tissu situé radialement à l'extérieur de l'armature de frettage.

Ainsi, préférentiellement, le tissu renforcé selon l'invention présente de part et d'autre des éléments de renfort métalliques des épaisseurs de gomme au dos des éléments de renfort métalliques, notées respectivement « edos_1 » et « edos_2 », mesurées selon une direction radiale, perpendiculaire au plan formé par les directions transverse et principale, telle que edos_1 et edos_2 vont indépendamment l'une de l'autre de 0,10 à 0,40 mm, préférentiellement de 0,10 à 0,25 mm, très préférentiellement de 0,15 à 0,22 mm.

### Composition élastomérique

Les éléments de renfort sont noyés dans une composition élastomérique, noyé devant s'entendre comme « totalement enrobés », à l'exception éventuelle des plans de coupe du tissu.

Par composition élastomérique, on entend une composition à comportement élastomérique. Une telle composition est avantageusement à base d'au moins un élastomère et d'un autre constituant.

De préférence, l'élastomère est un élastomère diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

La composition élastomérique peut comporter un seul ou plusieurs élastomère(s) diénique(s), également tout ou partie des additifs habituellement utilisés dans les compositions destinées à la fabrication de bandages, tels que par exemple des charges renforçantes comme le noir de carbone ou la silice, des agents de couplage, des agents anti-vieillissement, des antioxydants, des agents plastifiants ou des huiles d'extension, que ces dernières soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition élastomérique est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce. Par pce, on entend parties en poids pour cent parties d'élastomère.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, la composition élastomérique présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

### Bandage pneumatique

L'invention concerne également un bandage pneumatique comprenant un sommet comprenant une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet s'étendant dans le sommet selon la direction circonférentielle et située radialement entre l'armature de carcasse et la bande de roulement, l'armature de sommet comprenant une armature de travail comprenant au moins des première et deuxième nappes de travail, dans lequel au moins une nappe de travail est un tissu renforcé selon l'invention.

Par direction axiale, on entend la direction sensiblement parallèle à l'axe de rotation du bandage.

Par direction circonférentielle, on entend la direction qui est sensiblement perpendiculaire à la fois à la direction axiale et à un rayon du bandage (en d'autres termes, tangente à un cercle dont le centre est sur l'axe de rotation du bandage).

Par direction radiale, on entend la direction selon un rayon du bandage, c'est-à-dire une direction quelconque intersectant l'axe de rotation du pneumatique et sensiblement perpendiculairement à cet axe.

Par plan circonférentiel médian (noté M), on entend le plan perpendiculaire à l'axe de rotation du pneumatique qui est situé à mi-distance des deux bourrelets et passe par le milieu de l'armature de sommet.

Dans un mode de réalisation préféré, les éléments de renfort d'une première nappe de travail forment un angle allant de 10 à 45 degrés avec la direction circonférentielle.

Dans un mode de réalisation préféré, les éléments de renfort d'une deuxième nappe de travail forment un angle allant de 10 et 45 degrés avec la direction circonférentielle.

Avantageusement, les éléments de renfort des première et deuxième nappes de travail sont croisés entre eux entre la première nappe de travail et la deuxième nappe de travail. Ainsi, si l'angle que font les éléments de renfort de la première nappe de travail avec la direction circonférentielle est positif, l'angle que font les éléments de renfort de la deuxième nappe de travail avec cette même direction circonférentielle est négatif. Inversement, si l'angle que font les éléments de renfort de la première nappe de travail avec la direction circonférentielle est négatif, l'angle que font les éléments de renfort de la deuxième nappe de travail avec cette même direction circonférentielle est positif.

Dans un mode de réalisation préféré, l'angle que font les éléments de renfort de la première nappe de travail avec la direction circonférentielle est, en valeur absolue, sensiblement égal à l'angle que font les éléments de renfort de la deuxième nappe de travail avec cette même direction circonférentielle.

De manière préférée, chacune des deux nappes de travail est constituée d'un tissu renforcé selon l'invention.

De préférence, le bandage comprend en outre une armature de frettage comprenant au moins une nappe de frettage comprenant des éléments de renfort textiles agencés les uns sensiblement parallèlement aux autres dans la nappe de frettage. De préférence, ces éléments de renfort textiles sont noyés dans une composition élastomérique. La nappe de frettage est préférentiellement située entre la nappe de travail radialement la plus externe et la bande de roulement.

Les éléments de renfort textiles peuvent avoir toute forme connue, il peut s'agir certes de monofilaments mais le plus souvent ils sont constitués de fibres multifilamentaires retordues ensemble sous forme de cordes textiles.

Préférentiellement, les éléments de renforts textiles forment un angle au plus égal à 10°, de préférence allant de 5° à 10° avec la direction circonférentielle.

Préférentiellement, les éléments de renfort textiles sont thermorétractiles. Cela signifie qu'avec une hausse de la température, le matériau constitutif des éléments de renfort textiles se rétracte. La contraction thermique CT des éléments de renfort textiles, mesurée après 2 min à 185°C, est avantageusement inférieure à 7,5% dans les conditions énoncées ci-après du test et de préférence inférieure à 3,5%, plus préférentiellement inférieur à 3%, valeurs qui se sont révélées optimales pour la stabilité de fabrication et de dimensionnement des bandages, en particulier lors des phases de cuisson et refroidissement des ces derniers. La grandeur CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéique de l'échantillon testé). A longueur constante, on mesure également le maximum de la force de contraction (notée FC) à l'aide du test ci-dessus, cette fois à une température de 180°C et sous 3% d'élongation. Cette force de contraction FC est préférentiellement supérieure à 20 N (Newton). Une force de contraction élevée s'est révélée particulièrement favorable à la capacité de frettage des éléments de renfort textiles thermorétractiles, vis-à-vis de l'armature de sommet du bandage lorsque ce dernier s'échauffe sous une haute vitesse de roulage.

Les grandeurs CT et FC ci-dessus peuvent être indistinctement mesurées sur les éléments de renfort textiles initiaux encollés avant leur incorporation dans la nappe et le bandage, ou bien mesurées sur ces éléments de renfort une fois extraits de la zone centrale du bandage vulcanisé et de préférence « dégommés » (c'est-à-dire débarrassés de la composition d'élastomère dans laquelle ils sont noyés).

Tout matériau textile thermorétractile vérifiant les caractéristiques de contraction CT énoncées ci-dessus convient. De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Sont également utilisables, dans la mesure où ils vérifient la caractéristique CT préconisée, des renforts hybrides constitués de deux (au moins deux) matériaux différents tels que par exemple des câblés hybrides aramide/nylon, aramide/polyester, aramide/polycétone.

Dans le tissu renforcé selon l'invention, les différentes caractéristiques géométriques telles que les épaisseurs edos_1 et edos_2, pas de pose p, longueur W, hauteur T sont mesurées dans une partie centrale du tissu à l'état cru, c'est-à-dire non vulcanisé, sur une largeur axiale totale de 4 cm, en calculant une moyenne sur l'ensemble des éléments de renfort présents.

Dans le bandage pneumatique selon l'invention, les différentes caractéristiques géométriques telles que les épaisseurs edos_1 et edos_2, pas de pose p, longueur W, hauteur T sont mesurées dans la partie centrale de l'armature de sommet du bandage à l'état vulcanisé, de part et d'autre du plan médian M sur une largeur axiale totale de 4 cm, en calculant une moyenne sur l'ensemble des éléments de renfort présents dans la partie centrale de l'armature de travail, dans un intervalle axial s'étendant entre - 2 cm et + 2 cm par rapport au plan médian M.

### Description des figures

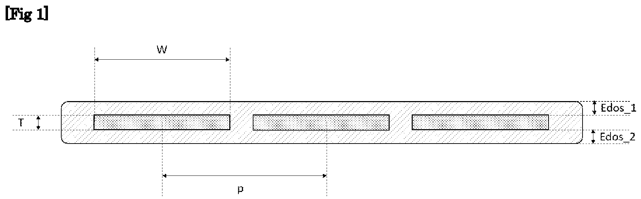

[Fig 1] La figure 1 représente une vue schématique d'une portion de tissu renforcé selon l'invention. Sur cette figure sont représentés, dans un plan de coupe perpendiculaire à la direction principale des éléments de renfort métalliques, trois éléments de renfort de largeur W et de hauteur ou épaisseur T, ces éléments étant juxtaposés selon un pas de pose p et noyés dans une composition élastomérique de telle sorte que le tissu présente de part et d'autre de chaque élément de renfort selon la direction radiale une épaisseur de gomme notée respectivement « edos_1 » et « edos_2 ».

### Méthodes de mesure

La force à rupture absolue d'une nappe, exprimée en N, est mesurée en multipliant le nombre d'éléments de renfort présents sur une longueur de 10 cm de la nappe selon la direction transverse par la force à rupture unitaire de chaque élément de renfort. Les mesures de force à la rupture, de résistance à la rupture notée R_{F} (en MPa) et d'allongement à la rupture noté At (allongement total en %) sont effectuées en traction selon la norme ISO 6892 de 1984.

La force à la rupture de la nappe est obtenue en divisant la force à rupture absolue de la nappe déterminée de la manière indiquée ci-dessus par 100, et s'exprime en N/mm.

On mesure la déformation élastique en torsion sur une longueur donnée d'élément de renfort métallique, par exemple une longueur allant de 5 à 10 m, et on ramène la valeur trouvée à 6 m afin d'obtenir la valeur C. Pour ce faire, on dispose d'une table d'une grande longueur, la longueur de la table étant au moins égale à la longueur de renfort métallique dont on mesure la déformation élastique en torsion, et on fixe une extrémité du renfort métallique à une extrémité de la table. On déroule le renfort métallique en prenant bien soin de maintenir le renfort métallique pour éviter qu'il ne tourne sur lui-même autour de son axe principal. A l'autre extrémité, on fait pendre le renfort métallique au bord de la table et on fixe à son extrémité une tige perpendiculairement à l'axe principal du renfort métallique. Puis, on laisse l'extrémité pendante du renfort métallique libre en rotation. On mesure alors le nombre de tours que fait la tige. Si la tige parcourt un tour incomplet, on rapporte l'angle parcouru sur ce tour à la valeur non entière de ce tour. Ainsi, pour un angle de 180°, on aura 0,5 tour.

La rigidité de flexion est estimée, pour un élément de renfort de section circulaire, par l'équation Y.d⁴/64, où d représente le diamètre de l'élément de renfort de section circulaire et Y représente le module de Young de cet élément. Un élément de renfort de section circulaire présente par construction la même rigidité de flexion sur champs et hors plan.

La rigidité de flexion est estimée, pour un élément de renfort de longueur W et de hauteur T par l'équation Y.T.W³/12 pour la rigidité de flexion sur champs et Y.W.T³/12 pour la rigidité de flexion hors plan, où Y représente le module de Young de cet élément.

### Exemples

Les essais qui suivent montrent les avantages des tissus renforcés conformes à l'invention.

Les tissus T1 et T3 correspondent à des tissus de l'état de la technique mettant en oeuvre des monofilaments unitaires métalliques en tant qu'éléments de renfort, de diamètre 0.32 mm dans le cas de T1, et de diamètre 0.35 mm dans le cas de T2. Le tissu T2 correspond à un tissu présentant la même épaisseur que le tissu conforme C1.

Les tissus C1 et T1 d'une part, C3 et T3 d'autre part, présentent la même distance intercâble. Le tissu T2 présente la même épaisseur que le tissu C1. Le tissu C2 présente la même masse, pour 1m² de tissu, que le tissu T2. Le tissu C4 comprend les mêmes éléments de renfort métalliques que le tissu C3 et la même résistance de nappe que le tissu T3.

Concernant la masse, les résultats sont indiqués en base 100 par rapport au tissu T1 pour les tissus C1, T2 et C2, et par rapport au tissu T3 pour les tissus C3 et C4. Une valeur supérieure à 100 signifie que le tissu présente une masse supérieure à la masse du tissu de référence et une valeur inférieure à 100 signifie que le tissu présente une masse inférieure à la masse du tissu de référence. Une masse de tissu plus élevée induit une résistance au roulement plus élevée d'un bandage pneumatique comprenant un tel tissu.

**[Tableau 1]**

| | **T1** | **C1** | **T2** | **C2** | **T3** | **C3** | **C4** |
|---|---|---|---|---|---|---|---|
| **Largeur W (mm)** | 0.32 | 0.42 | 0.25 | 0.53 | 0.35 | 0.5 | 0.6 |
| **Hauteur T (mm)** | 0.32 | 0.25 | 0.25 | 0.21 | 0.35 | 0.3 | 0.3 |
| **1/a = T/W** | 1.00 | 0.60 | 1.00 | 0.40 | 1.00 | 0.50 | 0.50 |
| **Force à rupture Rn (N/mm)** | 350 | 350 | 350 | 350 | 350 | 437.5 | 350 |
| **Pas de pose p (mm)** | 0.79 | 0.89 | 0.50 | 0.97 | 0.93 | 1.17 | 1.47 |
| **Intercâble (mm)** | 0.47 | 0.47 | 0.25 | 0.44 | 0.58 | 0.57 | 0.87 |
| **Epaisseur tissu (mm)** | 0.72 | 0.65 | 0.65 | 0.61 | 0.75 | 0.7 | 0.7 |

| **Mise en œuvre en bandage pneumatique** - **Base 100** | | | | | | | |
|---|---|---|---|---|---|---|---|
| **Rigidité de flexion hors plan** | 100 | 94 | 59 | 65 | 100 | 145 | 116 |
| **Rigidité de flexion sur champs** | 100 | 261 | 59 | 403 | 100 | 581 | 465 |
| **Résistance au roulement** | 100 | 95 | 93 | 93 | 100 | 110 | 99 |

## Revendications

1. Tissu renforcé comprenant une pluralité d'éléments de renfort métalliques substantiellement parallèles entre eux et s'étendant selon une direction principale, agencés selon une direction transverse perpendiculaire à la direction principale selon un pas de pose p exprimé en mm, noyés dans une composition élastomérique à base d'au moins un élastomère, une charge renforçante, un système de réticulation, chaque élément de renfort métallique présentant, dans un plan perpendiculaire à la direction principale, une section transverse inscrite dans un rectangle de longueur W et de hauteur T et ayant une résistance à la rupture R_{F} exprimée en MPa et mesurée selon la norme ISO 6892 de 1984, ledit tissu ayant une force à la rupture exprimée en N/mm égale à Rₙ, dans lequel le pas de pose des éléments de renfort métalliques est p≥ 0,8. R_{F}/Rₙ.(a-1+π/4).T², avec a=W/T et 1/a allant de 0,35 à 0,75.

2. Tissu renforcé selon la revendication précédente dans lequel le rapport 1/a va de 0,35 à 0,65, préférentiellement de 0,45 à 0,65.

3. Tissu renforcé selon l'une quelconque des revendications précédentes dans lequel la hauteur T va de 0,15 à 0,70 mm, préférentiellement de 0,15 à 0,40 mm, très préférentiellement de 0,20 à 0,30 mm.

4. Tissu renforcé selon l'une quelconque des revendications précédentes dans lequel le pas de pose p est tel que p≤ 1,2. R_{F}/Rₙ.(a-1+π/4).T²,

5. Tissu renforcé selon l'une quelconque des revendications précédentes dans lequel chaque élément de renfort métallique est au moins de grade dit « High Tensile », c'est-à-dire présentant une résistance à la rupture R_{F} supérieure ou égale à 3650-2000.D, où D, exprimé en mm, est égal à (T+W)/2.

6. Tissu renforcé selon l'une quelconque des revendications précédentes dans lequel chaque élément de renfort métallique est au moins de grade dit « Super High Tensile », c'est-à-dire présentant une résistance à la rupture R_{F} supérieure ou égale à 4000-2000.D, où D, exprimé en mm, est égal à (T+W)/2.

7. Tissu renforcé selon l'une quelconque des revendications précédentes dans lequel chaque élément de renfort métallique est au moins de grade dit « Ultra High Tensile », c'est-à-dire présentant une résistance à la rupture R_{F} supérieure ou égale à 4350-2000.D, où D, exprimé en mm, est égal à (T+W)/2.

8. Tissu renforcé selon l'une quelconque des revendications précédentes présentant de part et d'autre des éléments de renfort métalliques des épaisseurs de gomme au dos des éléments de renfort métalliques, notées respectivement « edos_1 » et « edos_2 », mesurées selon une direction radiale, perpendiculaire au plan formé par les directions transverse et principale, telle que edos_1 et edos_2 vont indépendamment l'une de l'autre de 0,10 à 0,40 mm, préférentiellement de 0,10 à 0,25 mm, très préférentiellement de 0,15 à 0,22 mm.

9. Tissu renforcé selon l'une quelconque des revendications précédentes dans lequel chaque élément de renfort comprend une âme en acier revêtue d'une couche de revêtement métallique réalisée dans un métal différent de l'acier.

10. Tissu renforcé selon l'une quelconque des revendications précédentes dans lequel chaque élément de renfort présente une déformation élastique en torsion C, exprimée en valeur absolue, inférieure ou égale à 6 tours par 6 m de renfort métallique, préférentiellement inférieure ou égale à 3 tours par 6 m de renfort métallique.

11. Tissu renforcé selon l'une quelconque des revendications précédentes dans lequel Rₙ est supérieure ou égale à 220 N/mm, de préférence supérieure ou égale à 300 N/mm, de manière préférée comprise entre 330 et 470 N/mm.

12. Tissu renforcé selon l'une quelconque des revendications précédentes dans lequel l'élastomère de la composition élastomérique est un élastomère diénique, préférentiellement un élastomère isoprénique.

13. Bandage pneumatique comprenant un sommet comprenant une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet s'étendant dans le sommet selon la direction circonférentielle et située radialement entre l'armature de carcasse et la bande de roulement, l'armature de sommet comprenant une armature de travail comprenant au moins des première et deuxième nappes de travail, dans lequel au moins une nappe de travail est un tissu renforcé selon l'une quelconque des revendications précédentes.

14. Bandage pneumatique selon la revendication précédente dans lequel chaque première et deuxième nappe de travail est constituée d'un tissu renforcé selon l'une quelconque des revendications 1 à 12.

15. Bandage pneumatique selon l'une quelconque des deux revendications précédentes comprenant en outre une armature de frettage comprenant au moins une nappe de frettage comprenant des éléments de renfort textiles agencés les uns sensiblement parallèlement aux autres dans la nappe de frettage.

## Patentansprüche

1. Verstärktes Gewebe, umfassend eine Vielzahl von metallischen Verstärkungselementen, die im Wesentlichen parallel zueinander sind und sich entlang einer Hauptrichtung erstrecken, entlang einer senkrecht zu der Hauptrichtung verlaufenden Querrichtung gemäß einem in mm ausgedrückten Legeabstand p angeordnet sind, in eine Elastomerzusammensetzung auf Basis mindestens eines Elastomers, eines verstärkenden Füllstoffs, eines Vernetzungssystems eingebettet sind, wobei jedes metallische Verstärkungselement in einer senkrecht zu der Hauptrichtung verlaufenden Ebene einen Querschnitt aufweist, der in ein Rechteck mit der Länge W und der Höhe T einbeschrieben ist, und eine in MPa ausgedrückte und nach der Norm ISO 6892 von 1984 gemessene Bruchfestigkeit R_{F} aufweist, wobei das Gewebe eine in N/mm ausgedrückte Bruchkraft gleich Rₙ besitzt, wobei der Legeabstand der metallischen Verstärkungselemente p≥ 0,8. R_{F}/Rₙ.(a⁻1+π/4).T² ist, worin a=W/T ist und 1/a im Bereich von 0,35 bi 0,75 liegt.

2. Verstärktes Gewebe nach dem vorhergehenden Anspruch, wobei das Verhältnis 1/a im Bereich von 0,35 bis 0,65, bevorzugt von 0,45 bis 0,65 liegt.

3. Verstärktes Gewebe nach einem der vorhergehenden Ansprüche, wobei die Höhe T im Bereich von 0,15 bis 0,70 mm, bevorzugt von 0,15 bis 0,40 mm, besonders bevorzugt von 0,20 bis 0,30 mm liegt.

4. Verstärktes Gewebe nach einem der vorhergehenden Ansprüche, wobei der Legeabstand p derart ist, dass p≤ 1,2. R_{F}/Rₙ.(a⁻1+π/4).T².

5. Verstärktes Gewebe nach einem der vorhergehenden Ansprüche wobei jedes metallische Verstärkungselement mindestens von der Klasse ist, die als "High Tensile" bezeichnet wird, d. h. eine Bruchfestigkeit R_{F} größer oder gleich 3650-2000.D aufweist, wobei D, in mm ausgedrückt, gleich (T+W)/2 ist.

6. Verstärktes Gewebe nach einem der vorhergehenden Ansprüche wobei jedes metallische Verstärkungselement mindestens von der Klasse ist, die als "Super High Tensile" bezeichnet wird, d. h. eine Bruchfestigkeit R_{F} größer oder gleich 4000-2000.D aufweist, wobei D, in mm ausgedrückt, gleich (T+W)/2 ist.

7. Verstärktes Gewebe nach einem der vorhergehenden Ansprüche wobei jedes metallische Verstärkungselement mindestens von der Klasse ist, die als "Ultra High Tensile" bezeichnet wird, d. h. eine Bruchfestigkeit R_{F} größer oder gleich 4350-2000.D aufweist, wobei D, in mm ausgedrückt, gleich (T+W)/2 ist.

8. Verstärktes Gewebe nach einem der vorhergehenden Ansprüche, das zu beiden Seiten der metallischen Verstärkungselemente Gummidicken auf dem Rücken der metallischen Verstärkungselemente aufweist, die mit "edos_1" beziehungsweise "edos_2" bezeichnet werden und entlang einer radialen Richtung, senkrecht zu der durch die Quer- und Hauptrichtungen gebildete Ebene, gemessen werden, so dass edos_1 und edos_2 unabhängig voneinander im Bereich von 0,10 bis 0,40 mm, bevorzugt von 0,10 bis 0,25 mm, besonders bevorzugt von 0,15 bis 0,22 mm liegen.

9. Verstärktes Gewebe nach einem der vorhergehenden Ansprüche, wobei jedes Verstärkungselement eine Seele aus Stahl umfasst, die mit einer metallischen Überzugsschicht überzogen ist, die aus einem von Stahl verschiedenen Metall ausgeführt ist.

10. Verstärktes Gewebe nach einem der vorhergehenden Ansprüche, wobei jedes Verstärkungselement eine elastische Torsionsverformung C, ausgedrückt als absoluter Wert, kleiner oder gleich 6 Drehungen je 6 m metallische Verstärkung, bevorzugt kleiner oder gleich 3 Drehungen je 6 m metallische Verstärkung aufweist.

11. Verstärktes Gewebe nach einem der vorhergehenden Ansprüche, wobei Rₙ größer oder gleich 220 N/mm, bevorzugt größer oder gleich 300 N/mm ist, vorzugsweise zwischen 330 und 470 N/mm beträgt.

12. Verstärktes Gewebe nach einem der vorhergehenden Ansprüche, wobei das Elastomer der Kautschukzusammensetzung ein Dienelastomer, bevorzugt ein Isoprenelastomer ist.

13. Luftreifen, umfassend einen Gürtel, umfassend einen Laufstreifen, zwei Seitenwände, zwei Wülste, wobei jede Seitenwand jeden Wulst mit dem Gürtel verbindet, eine Karkassenverstärkung, die in jedem der Wülste verankert ist und sich in den Seitenwänden und in dem Gürtel erstreckt, eine Gürtelverstärkung, die sich in dem Gürtel entlang der Umfangsrichtung erstreckt und radial zwischen der Karkassenverstärkung und dem Laufstreifen gelegen ist, wobei die Gürtelverstärkung eine Arbeitsverstärkung umfasst, die mindestens erste und zweite Arbeitslagen umfasst, und wobei mindestens eine Arbeitslage ein verstärktes Gewebe nach einem der vorhergehenden Ansprüche ist.

14. Luftreifen nach dem vorhergehenden Anspruch, wobei jede erste und zweite Arbeitslage aus einem verstärkten Gewebe nach einem der vorhergehenden Ansprüche 1 bis 12 besteht.

15. Luftreifen nach einem der beiden vorhergehenden Ansprüche, umfassend ferner eine Umreifungsverstärkung, die mindestens eine Umreifungslage umfasst, die textile Verstärkungselemente umfasst, die im Wesentlichen parallel zueinander in der Umreifungslage angeordnet sind.

## Claims

1. A reinforced fabric comprising a plurality of substantially parallel metal reinforcing elements extending in a main direction, arranged in a transverse direction perpendicular to the main direction at a laying pitch p expressed in mm, embedded in an elastomer composition based on at least one elastomer, a reinforcing filler, and a crosslinking system, each metal reinforcing element having, in a plane perpendicular to the main direction, a cross-section inscribed in a rectangle of length W and height T and having a breaking strength R_{F} expressed in MPa and measured in accordance with ISO 6892:1984, said fabric having a breaking force expressed in N/mm equal to Rₙ, wherein the laying pitch of the metal reinforcing elements is p≥ 0.8. R_{F}/Rₙ.(a-1+π/4).T², where a=W/T and 1/a ranges from 0.35 to 0.75.

2. The reinforced fabric as claimed in the preceding claim, wherein the ratio 1/a ranges from 0.35 to 0.65, preferably from 0.45 to 0.65.

3. The reinforced fabric as claimed in any of the preceding claims, wherein the height T ranges from 0.15 mm to 0.70 mm, preferably from 0.15 to 0.40 mm, and more preferably from 0.20 to 0.30 mm.

4. The reinforced fabric as claimed in any one of the preceding claims, wherein the laying pitch p is such that p≤ 1.2. R_{F}/Rₙ.(a-1+π/4).T².

5. The reinforced fabric as claimed in any one of the preceding claims, wherein each metal reinforcing element is at least high tensile grade, that is, having a breaking strength R_{F} greater than or equal to 3,650-2,000.D, where D, expressed in mm, is equal to (T+W)/2.

6. The reinforced fabric as claimed in any one of the preceding claims, wherein each metal reinforcing element is at least super high tensile grade, that is, having a breaking strength R_{F} greater than or equal to 4,000-2,000.D, where D, expressed in mm, is equal to (T+W)/2.

7. The reinforced fabric as claimed in any one of the preceding claims, wherein each metal reinforcing element is at least ultra high tensile grade, that is, having a breaking strength R_{F} greater than or equal to 4,350-2,000.D, where D, expressed in mm, is equal to (T+W)/2.

8. The reinforced fabric as claimed in any one of the preceding claims, having, on either side of the metal reinforcing elements, rubber thicknesses on the back of the metal reinforcing elements, respectively denoted "edos_1" and "edos_2", measured in a radial direction perpendicular to the plane formed by the transverse and main directions, such that edos_1 and edos_2 range independently of each other from 0.10 to 0.40 mm, preferably 0.10 to 0.25 mm, and more preferably 0.15 to 0.22 mm.

9. The reinforced fabric as claimed in any one of the preceding claims, wherein each reinforcing element comprises a steel core covered with a metal coating layer made from a metal other than steel.

10. The reinforced fabric as claimed in any one of the preceding claims, wherein each reinforcing element has a torsional elastic deformation C, expressed as an absolute value, less than or equal to 6 turns per 6 m of metal reinforcer, preferably less than or equal to 3 turns per 6 m of metal reinforcer.

11. The reinforced fabric as claimed in any one of the preceding claims, wherein Rₙ is greater than or equal to 220 N/mm, preferably greater than or equal to 300 N/mm, more preferably between 330 and 470 N/mm.

12. The reinforced fabric as claimed in any one of the preceding claims, wherein the elastomer of the elastomer composition is a diene elastomer, preferably an isoprene elastomer.

13. A pneumatic tire comprising a crown comprising a tread, two sidewalls, and two beads, each sidewall connecting each bead to the crown, a carcass reinforcement anchored in each of the beads and extending in the sidewalls and in the crown, a crown reinforcement extending in the crown in the circumferential direction and situated radially between the carcass reinforcement and the tread, the crown reinforcement comprising a working reinforcement comprising at least first and second working plies, wherein at least one working ply is a reinforced fabric as claimed in any one of the preceding claims.

14. The pneumatic tire as claimed in the preceding claim, wherein each first and second working ply consists of a reinforced fabric as claimed in any one of claims 1 to 12.

15. The pneumatic tire as claimed in any one of the preceding claims, comprising a hoop reinforcement comprising at least one hooping ply comprising textile reinforcing elements arranged substantially parallel to each other in the hooping ply.
